# EUROPEAN PATENT APPLICATION

(11) **EP 2 390 056 A2**
(43) Date of publication of application: **30.11.2011**
(21) Application number: 11167658.1
(22) Date of filing: 26.05.2011
(51) Int. Cl.: B24D 18/00, B24D 99/00, B24D 11/00

(54) **Abrasive product and the method for coating the same**

(30) Priority: 28.05.2010 FI 20105606
(71) Applicant: OY KWH MIRKA AB, 66850 Jeppo (FI)
(72) Inventor: Hede, Hans, 66600 Vörå (FI)
(74) Representative: Niemi, Hakan Henrik

(57) **Abstract**

The present invention relates to an abrasive product (1) and a method for manufacturing the same. Such an abrasive product (1) comprises a backing (4), a binder (3) arranged thereon in the form of a bottom adhesive, and abrasive grains (2) arranged in the bottom adhesive. In order to produce the present abrasive product (1), the binder (3) has been distributed dropwise, whereby the binder (3) forms primarily dot-like units (9) on the surface of the backing (4). The distribution of the binder (3) is performed with a dot printer arranged to produce said dot-like units (9) in a substantially uniform front.

## Description

### Technical field

The present invention relates to an abrasive product according to the preamble of independent claim 1.

The present invention also relates to a method for coating an abrasive product of the type presented in the preamble of independent claim 7.

Such abrasive products are used particularly for grinding and polishing of demanding surfaces that are to be ground smooth and polished.

### Prior art

To obtain flawless surfaces in fine grinding and polishing, it is desirable to use as fine grain sizes as possible for the abrasive grains. In coating fine grains, a plurality of problems arise. In conventional electrostatic coating, there are problems with fine grains that easily agglomerate together and become difficult to sprinkle evenly. It is also difficult to coat fine grains in a single layer without "riders", i.e. grains that adhere to grains in an underlying layer in an undesirable manner.

Even if fine grains are coated in the form of a slurry of abrasive grains and binder, problems will arise. Firstly, it is very difficult to distribute the slurry evenly with conventional methods because the abrasive grains affect the spreading and, in addition, it is difficult to obtain sufficient abrasive effect when the abrasive grains are embedded in the binder.

Another problem is that with fine abrasive products made conventionally, a very smooth surface is obtained which, in grinding, tends to stick to the surface to be ground. This sticking results from the abrasive liquid being pressed aside and evaporating, and the abrasive residues that accumulate thicken the abrasive liquid as well. The course of the grinding gets difficult to control and the abrasive residues prevent the abrasive grains from getting into contact with the surface to be ground at the same time as individual accumulations of abrasive residues that cannot be spread out or transported away result in flaws in the surface to be ground.

Publication US 5,014,468, for example, discloses a flexible abrasive product comprised by a flexible backing and a coating in the form of a slurry of adhesive and sand. According to the publication, the surface of the coating provides three-dimensional formations that form a discontinuous surface, usually a hexagonally opened pattern. The simplest way to achieve this pattern is with a screen roll. The disadvantage with this solution is that the height of the formations cannot be completely controlled in the film splitting in each deposit on the surface of the screen roll that takes place in withdrawal from the surface to be coated.

Publication US 5,152,917 discloses an abrasive product coated with a slurry of fine abrasive grains and binder, which has, in the coating, been moulded or cast to a structured and precise non-random pattern, usually to three-sided or four-sided pyramids, which may vary in width but stay in rectilinear formations. The abrasive grains have a significantly smaller size than the structures themselves, whereby the make-up of the structure is so fragile that it is easily formed against the surface that is to do the grinding. The idea of the solution is that in this way a more uniform surface fineness is achieved throughout the whole life span of the product. In addition, the idea is that abrasive liquid, dust or air should be able to move in the intermediate space between the structures and that the abrasive product would thus be easier to use. Publication US 5,304,223 discloses a method for manufacturing and using a product according to the publication. The problem with this invention is that the manufacture requires a very advanced apparatus with a large rotogravure roll for providing the demanding structure. If several different patterns are desirable, separate rolls for all the different patterns are necessary.

Publication WO 01/64396 discloses manufacturing of a tool for polishing by means of a polishing slurry. What is used here is a method known as such for building up, by means of a piezoelectric printer, a controlled structure in the contact surface of this polishing tool for the slurry. This structure may also contain abrasive particles. The solution is based on an active layer which has a thickness of 0.05 to 0.2 mm and may contain abrasive particles embedded in the active layer. The active layer is constructed to direct, by means of friction, abrasive grains of the slurry against the surface to be polished. The polishing tool is thus intended for polishing with a separate slurry which is brought to the contact surface between the polishing tool and the surface to be polished. The polishing tool may be given a precise structure but it does not have the controlled direct cut that an abrasive product with individual abrasive grains directly fastened to the backing has and where a desired portion of each grain is uncovered to be able to cut materials.

Publication EP 1308945, which describes generally coating of an abrasive product with a metal rotating part as the body, discloses the use of a microdosing system with a nozzle that sprays the binder in the form of droplets onto the surface to be coated. By combining the reciprocal movements of the nozzle and the body, sufficient accuracy for collecting and positioning of the abrasive grains can be achieved. This is possible when the rotating parts are such that in the coating they can be fastened to a device which makes them rotate. A rotating part which rotates around its centre returns to exactly the same position at each revolution. However, this method for coating is difficult to use if, for example, a conveyor belt is to be coated which cannot be, in the same way, repeatedly fed forward to exactly the same position in the lateral direction. It becomes difficult to synchronize the following row of droplets with the preceding one as precisely as required by the present invention.

### Presentation of the problem

The present invention allows the problems of known solutions to be substantially avoided. This task is carried out in accordance with the invention by providing an abrasive product with the characterizing features of claim 1, while a method for coating said abrasive product is provided with the characterizing features of claim 7. The corresponding dependent claims that follow present suitable further developments and variations of the invention that further improve its functioning.

The present invention discloses products and a method for manufacturing these products, where very fine abrasive grains (0.5 to 15 µm) can be coated with an amount of binder that is so carefully controlled that it is possible to ensure primarily one abrasive layer, on one hand, and such a height for the binder, on the other hand, which has an extent that exposes the grain tips in a desired manner.

With the device/method according to the present invention, a plurality of significant advantages are achieved over the prior art. Thus, the new technique for coating fine grains described by the invention is particularly suitable for use in manufacturing special abrasive products in which expensive and very hard abrasive grains, such as diamond or boron nitride, are used. The present invention is also applicable to the use of conventional abrasive grain types with improved grain size distribution.

Coating the abrasive product with substantially dot-like binder units with the aid of printer technology of the piezoelectric type, for example, allows the amount of binder or slurry per unit area of the backing to be dosed very precisely. In addition, it is possible to create various specific patterns very precisely in the coating. Selecting patterns for the abrasive product is also very flexible because no separate tool is required in the manufacture. The disclosed method is very economical because it allows only the surface that is to be used in the abrasive product to be selectively coated.

Further advantages and details of the invention become apparent from the description below.

### Brief description of the figures

In the following, the invention will be described in greater detail with reference to the drawing, in which
Figure 1 shows schematically distribution of binder on a backing;
Figure 2 shows schematically the effect of the distribution and volume of the print droplets on the layer thickness of the print dot on the backing;
Figure 3 illustrates the distribution of the binder as well as spreading of the binder that takes place when the printer droplets formed by the binder hit the backing;
Figure 4 illustrates alternative distribution of the binder as well as spreading of the binder that takes place when the printer droplets formed by the binder hit the backing;
Figure 5 illustrates further alternative distribution of the binder as well as spreading of the binder that takes place when the printer droplets formed by the binder hit the backing;
Figure 6 shows section D - D of an abrasive product according to Figure 5, whereby the abrasive grains arranged on the surface of the backing can be distinguished;
Figure 7 shows an SEM detail image of a practical example of distribution of the primarily dot-like abrasive units produced according to Figure 1 on the surface of the backing;
Figure 8 shows an SEM detail image of dot-like abrasive units on the backing;
Figure 9 shows an SEM detail image of distribution and merging of the abrasive units;
Figure 10 shows an SEM detail image of alternative distribution and merging of the abrasive units;
Figure 11 shows an SEM detail image of dot-like abrasive units provided by coating with a slurry of adhesive and sand on the surface of the backing;
Figure 12 shows an SEM detail image of an embodiment according to Figure 11;
Figure 13 shows an SEM detail image of a coating test with a grain size of about 5 µm;
Figure 14 shows an SEM detail image of a sprinkling test according to Figure 13 enlarged;
Figure 15 shows an SEM detail image of a sprinkling test according to Figure 13 with a layer of binder on top.
Figure 16 shows an SEM detail image of formations of dot-like abrasive units merged in a dense pattern; and
Figure 17 finally shows an SEM detail image of formations of dot-like abrasive units merged in a specific zigzag pattern.

### Preferred embodiment

The above figures do not show the abrasive product in scale but are only intended to illustrate constructive solutions of the preferred embodiments and the functioning of the embodiments. Hereby, the reference numerals shown in the figures correspond to the constructive solutions presented in the description below.

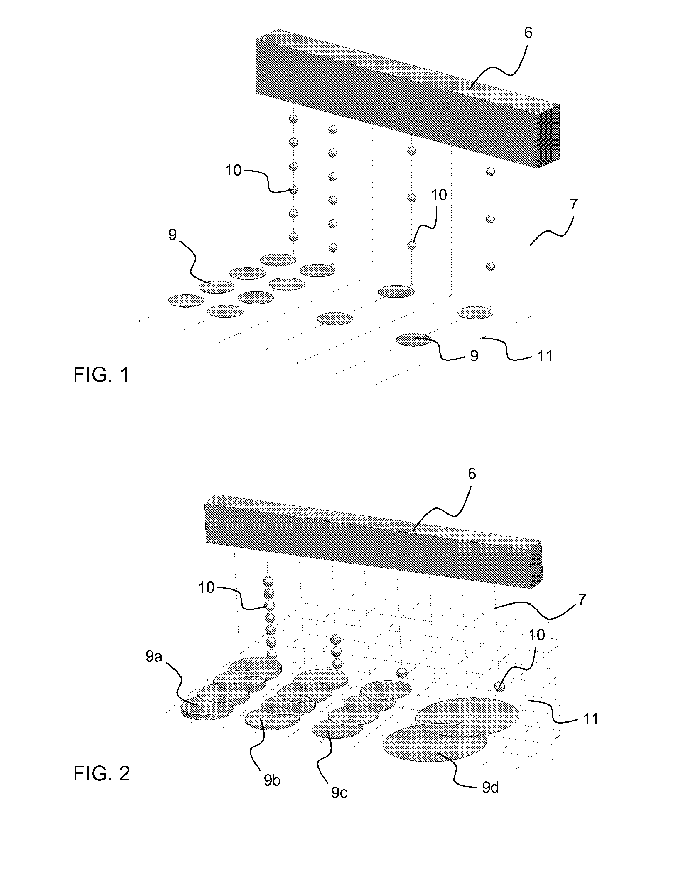

To be able to coat an abrasive product 1 with abrasive grains 2 having a very small diameter, preferably in a specific pattern, a special what is called dot printer technique has turned out suitable. A printer utilizing this droplike distribution of printer liquid provides the printout with a grid - a raster - which the printer attempts to fill with distribution of printer liquid. By means of such a technique, which is shown schematically in Figure 1, it is possible to very accurately determine a coating pattern and also to dose the amount of binder 3 or slurry formed by binder and abrasive grains that is to be applied at a corresponding moment of time and in a corresponding orientation of the print backing to the print backing per unit area. This print backing is thus formed by a backing 4 of the abrasive product.

By means of the droplike distribution, the binder 3 forms primarily what are hereafter called dot-like units 5 hereafter - print dots - on the surface of the backing. The dot printer technique used here preferably utilizes at least one print head 6 which preferably produces a substantially linear one-dimensional row or front of jets 7 for distributing the printing liquid. A dot printer utilizing ink jet printer technology of, for example, the piezoelectric type has turned out particularly suitable for this purpose. An ink jet printer with the present construction can achieve distribution where resolution of the dot-like binder units is in the range of 200 to 500 dpi, but resolutions in another range are also feasible. Mounting two or more print heads one after the other in parallel allows the resolution to be further reduced.

The print head 6 of such an ink jet printer may be fixedly mounted relative to the backing 4 to be coated, whereby the backing moves in relation to the print head. Alternatively, the print head may be mounted on a movable device with sufficiently many degrees of freedom, so that even three-dimensional individual bodies can be coated or two-dimensional abrasive products formed piece by piece on a conveying material belt. Such a print head or parallel-mounted print heads preferably have a width substantially extending over the whole width of an individual coated product. In this way, it is possible to avoid one or more disturbing joints in the coating provided on the backing.

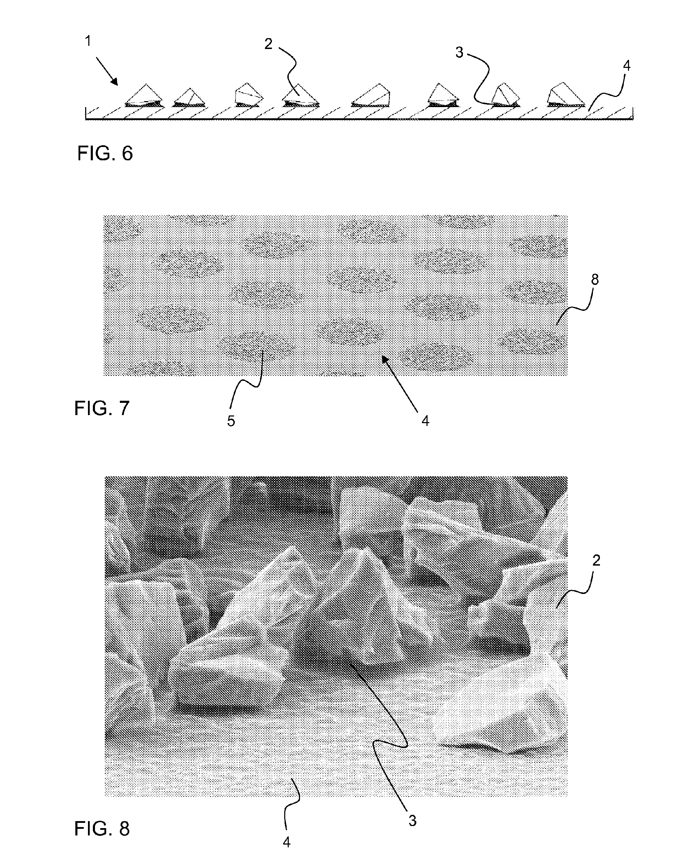

Selection of patterns for the abrasive product 1 becomes very flexible with the present coating method because there is no need for separate tools for different patterns. It is possible, for example, to make individual dot-like abrasive-grain-coated units of different sizes - hereafter referred to as "islands" - so that there is determined openness between the dot-like units 5 positioned adjacent to each other to obtain a structure that does not absorb but allows air or liquid to move in the channels 8 created by the pattern. This is illustrated by, for example, Figure 7 that shows a detail of the abrasive surface of an abrasive product. In the figure, a backing 4 can be seen which has substantially round and primarily dot-like abrasive units on the surface of the backing. Such an abrasive unit hereby comprises a first layer of binder 3 forming the bottom adhesive of the abrasive product, and abrasive grains 2 arranged on the bottom adhesive. A binder droplet forming the substantially round dot-like unit of the corresponding abrasive unit with bottom adhesive according to this embodiment has preferably a volume of 2 to 50 pl. Varying the composition of the binder and the size (volume) of the droplets allows a coating layer to be achieved which even has a layer thickness not exceeding 100 nm. The abrasive grains comprised by such an abrasive unit preferably have a grain size of 0.5 to 15 µm.

In the coating of the backing 4, the abrasive grains 2 are sprinkled in a separate operation stage. The sprinkling may hereby be performed in the binder-coated areas of the backing surface before hardening of the binder but preferably after a possible solvent of the binder has evaporated. Due to the extremely small amount of bottom adhesive that is thus dosed in the dot-like unit 5, the bottom adhesive will, due to the capillary force, be absorbed by the abrasive grains captured therein. The process can be illustrated in more detail with the aid of Figures 6 and 8. Thus, in the figures, abrasive grains can be distinguished which are arranged with controlled, open coating on the backing of the abrasive product. The abrasive grains have, with their contact with the bottom adhesive, absorbed all adhesive in their surroundings, which has resulted in a nearly binder-free backing. The binder being primarily bound to the lower surface of the abrasive grains against the backing prevents "riders" from being formed, in other words abrasive grains that would stick to the abrasive grains already fastened to the backing.

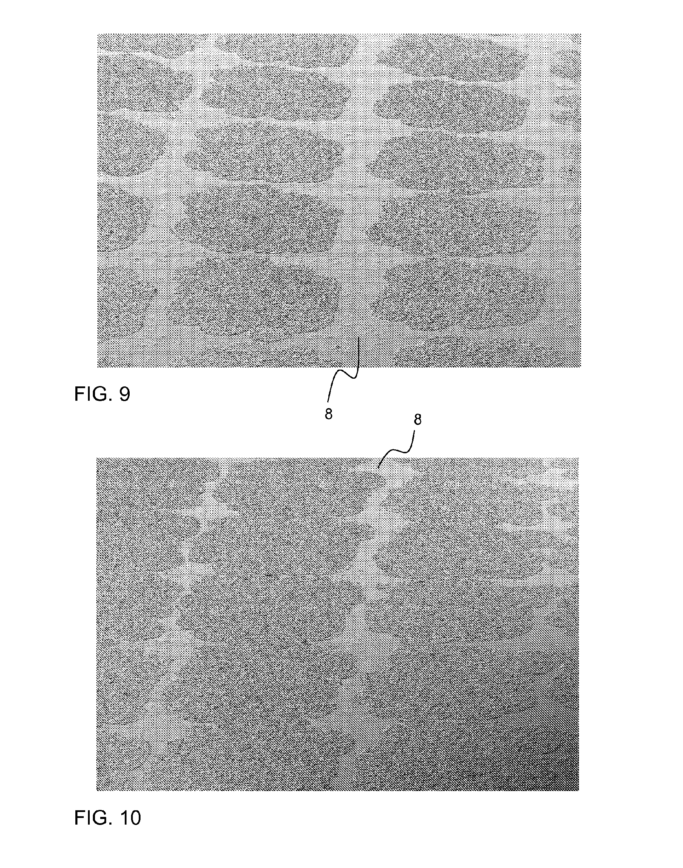

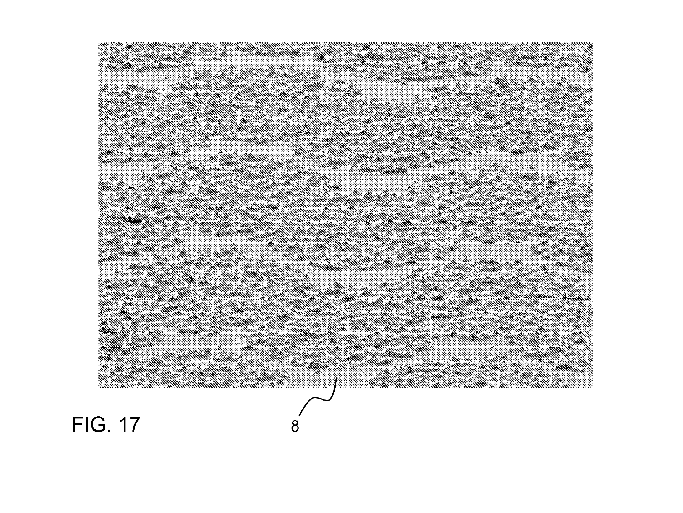

Controlling the dosing amount and the raster resolution of the printer allows the dot-like units 5 of the binder 3, dosed adjacent to each other, to assume various formations and positions on the backing 4. This is illustrated by, for example, Figures 9 and 10. Figure 9 thus shows units with binder and abrasive grains 2 arranged therein which have merged into greater unit groups - islands. Further increasing or intensifying the dosing of binder or increasing the raster resolution provides islands which have more or less merged with adjacent islands. Since the developed printer technique allows the positioning of units of binder to be accurately controlled on the backing, it is also possible to arrange corresponding units or islands formed out of them in desirable, specially shaped formations. This is illustrated by, for example, Figure 17. These formations may coincide or cooperate with the outer shape of the abrasive product and with channels, openings or other structures on the backing of the abrasive product. This is particularly important because the structural depth which can be provided with the abrasive grain coating is not necessarily quite sufficient for completely preventing suction and clogging of the abrasive tool when the grain size goes down towards micron or submicron sizes.

Since the present coating technique makes it significantly simpler to create new patterns and to selectively coat various structures in the backing 4 of an abrasive product 1, more advanced abrasive systems can be developed than before, also when the abrasive grains reach a grain size of less than 15 µm.

The three-dimensional backing of injection-moulded or laser-cut abrasive products or abrasive products shaped in another way may be provided with desired channel and hole systems in the contact surface as early as in the manufacturing, and the resulting islands of the surface may then be selectively coated on the desired surfaces by controlling the binder dosing of the printer to correspond to these desired surfaces. In addition, the coating itself may naturally be provided with a pattern that is adapted to the pattern of the backing and/or according to the load the abrasive product will be subjected to during use.

For special products, for instance optical lenses or bearing areas, the abrasive product may be optimized so that it corresponds to the desired shape.

By controlling the dosing of binder 3 and the raster resolution in the printer, the formations can, in a simple manner, be provided with various geometric shapes that can be positioned in a desired manner and at a desired distance in relation to each other. The coating pattern may also, within some limits, be formed completely randomly with regard to the form, position and direction of the units alike.

Since the dosing of binder 3 can be accurately controlled with the present printer technique, it is also simple to coat on a material belt only the areas that are die cut into an individual product. It is also possible to coat different abrasive products 1 with separate patterns on the same backing separately from each other. In this way, it becomes possible to produce different adjacent abrasive products at the same time without having to change tools during the manufacturing process.

The coating may even be performed in such a way that the coating ends at a sufficient distance from the coming die-cutting periphery of each individual product so that there is no need to cut in the abrasive grain coating when die cutting or cutting out the abrasive products already shaped. Particularly when using expensive abrasive grains 2, for example natural or synthetic diamond or boron nitride, this technique allows very small amounts of coating per unit area to be used. The abrasive grains may naturally be formed of conventional abrasive grain materials, such as sand, or ceramic particles, for example.

The backing 4 coated with the present technique may equally well be rigid or flexible. With the described coating method, two-dimensional plane-like as well as three-dimensional specially shaped backings or abrasive tool bodies can also be used because bent, convex and curved surfaces can also be coated selectively and with a varying coating angle.

Owing to the selective coating technique, it is also possible to coat only that part of the surface of the abrasive product 1 that is elevated and comes into contact with the surface to be ground. In this way, the consumption of abrasive can be reduced without the abrasive performance of the tool being reduced.

Previously, it has been possible to achieve controlled open coating with conventional methods, such as roll application, in primarily one layer of abrasive grains 2 of grain sizes down to about 15 µm. The present invention allows open coating with a grain size of below 1 µm to be achieved. This is possible because so small amounts of adhesive can be coated evenly and controllably that the amount which a grain with a size of below 1 µm absorbs under itself in the moistening of its contact surface with the adhesive layer is not sufficient for an amount which would result in closed coating, i.e. in the abrasive grains lying side by side.

In sprinkling the abrasive grains 2, what is called electrostatic coating is used. To be able to better control the electrostatic coating of abrasive grains of the present size range, it is particularly preferable to use a coating device where electrostatic coating can be combined with fog coating. When forming the fog of abrasive grains that is to be electrostatically drawn to the binder-coated surface, the abrasive grain fog must be simultaneously blown through a filter with so small openings that it becomes possible to avoid grains agglomerated together.

In the tests performed, an ink jet printer has been used which produces two synchronized and substantially parallel rows of jets 7, each corresponding to the one shown in Figure 1. Each individual print droplet arriving in the raster cell of the backing 4 and forming a print dot 9 on it consists of 1 to 7 basic droplets 10 of 6 picolitres. Thus, the size (volume) of the print droplet may be, in this embodiment, varied in seven steps between 6 to 42 picolitres.

In Figure 2, four different resulting print dots 9a, 9b, 9c and 9d can be distinguished on the backing. On the leftmost side, two raster lines 11 are shown with print dots 9a resulting from cooperation of seven basic droplets. In the middle of the print head 6, a raster line is shown with print dots 9b resulting from cooperation of three basic droplets, while on their right a raster line can be seen with print dots 9c resulting from one single basic droplet 10. As can be distinguished in the figure, the print dots have a layer thickness which depends on the number of basic droplets having formed the print droplet. In order to better illustrate the formation of the print dot, the raster lines with print dots 9a, 9b and 9c have been shown here separate from the adjacent raster lines with print dots. In present tests, however, these raster lines would have a reciprocal distance of 70 µm. By increasing the distance between the active jets, a result can be achieved which is shown on the rightmost side in Figure 2. Thus, the raster resolution realized by the print head has been decreased, whereby the reciprocal distance of the raster lines would be 140 µm, which, in turn, results in greater raster cells. Due to a greater available space, the print dot 9d will spread out more than in the situation described above, which, in turn, results in a thinner binder layer on the backing.

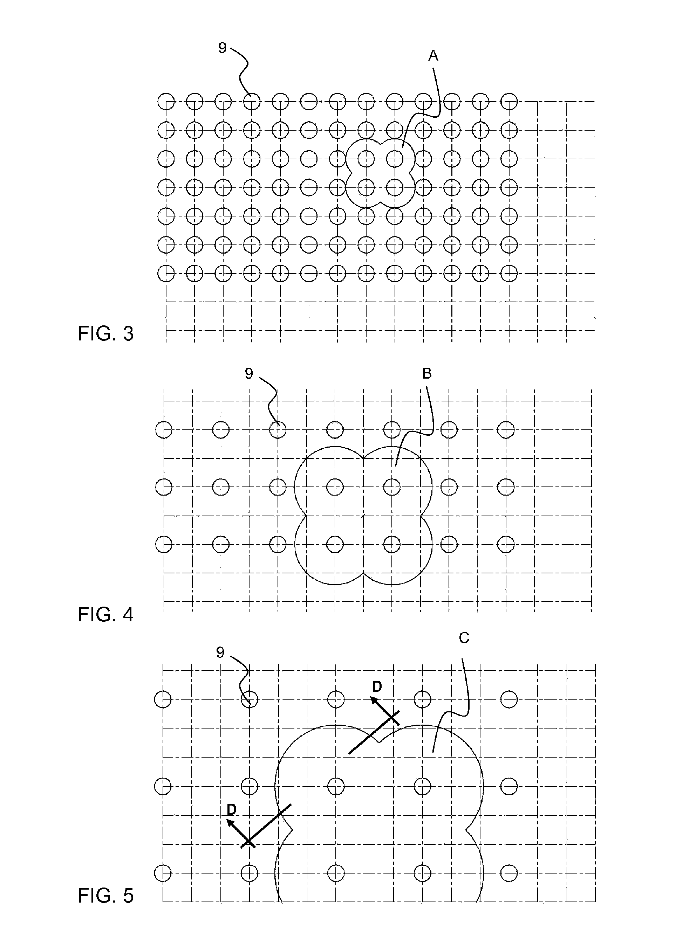

Utilizing two rows of print heads mounted in parallel one after the other and moving them relative to each other allows a raster resolution to be achieved which corresponds to half of the jet distance, i.e. the above-mentioned 70 µm. In the tests performed, a printer resolution of 70 µm and a raster resolution of 363 Ipi (lines per inch) have thus been achieved. Such a distribution can be schematically illustrated with the aid of Figure 3. The figure shows distribution of the print dots along the backing 4 in an embodiment where a maximum raster resolution has been utilized at the same time as the backing has been moved relative to the print head (print heads) at a substantially uniform speed. The figure also illustrates, in area A, the spreading taking place when the printer droplets formed by binder hit the backing.

To be able to fasten very fine abrasive grains 2 (< 15 µm) to a single layer on the backing 4 of the abrasive product, the amount of bottom adhesive formed by the binder 3 applied to the backing must be so small and uniformly applied over the surface of the backing that the sprinkled abrasive grains cannot be moistened more than on the underside that is in contact with the bottom adhesive. The film thickness of the bottom adhesive must thus be so thin in relation to the size of the abrasive grain that the capillary forces are able to absorb adhesive to a sufficient extent to fasten the abrasive grain to the backing, but are not able to absorb adhesive to such an extent that it would be sufficient for moistening abrasive grains that become positioned upon the abrasive grains already moistened and fastened by the adhesive. The behaviour of the bottom adhesive is illustrated particularly well by the attached SEM images in Figures 8, 13 and 14.

In minimizing the coating amounts of bottom adhesive, not only thinning of the binder 3 itself but also the adjustment of the printer can be utilized in the following different ways.

Firstly, only every other jet 7 may be activated, in which case the raster resolution is halved, the surface of the raster cells being thus quadrupled compared with the ordinary operation. This is illustrated schematically in Figure 4. A sparser resolution results in each print droplet having a larger surface of the backing 4 to fill. The more of the print dot 9 produced by the print droplets spreads out on the backing, the thinner becomes the film thickness of the resulting bottom adhesive. Figure 4 also illustrates, in area B, the spreading taking place when the printer droplets formed by binder hit the backing.

Secondly, it is possible to use only one or few basic droplets 10 of the maximum number of seven basic droplets to produce each individual print droplet, whereby the total amount of binder 3 in the print drop naturally decreases to a corresponding degree. Compare with Figure 2. A smaller amount of binder results in each individual print dot 9b or 9c having a thinner film thickness in the bottom adhesive.

It is also possible to further open the resolution of the printer by leaving an even greater proportion of jets 7 inactivated in the active row of the print head 6, which is illustrated in Figures 2 and 5. Hereby, the raster resolution will further decrease, compared with the ordinary operation. A sparser raster resolution results, as described above, in each print droplet having a larger raster cell on the backing 4 to fill. The more of the print dot produced by the print droplets spreads out on the backing, the thinner becomes the film thickness of the resulting bottom adhesive. Figure 5 illustrates, in area C, the spreading taking place when the printer droplets formed by binder hit the backing.

This resolution-based thinning out on the micro level is not to be mixed up with different patterns of uncoated or coated surfaces. The purpose of making the printer resolution sparser is to reduce the layer thickness of the binder 3, while the purpose of a pattern in the coating is to actively improve dust and liquid transport by preparing transport routes thereto on the upper surface of the abrasive product 1.

The smallest film thickness of binder 3 that can be coated also varies according to the properties of the binder, such as viscosity and surface tension, which can be affected by the chemical composition of the binder but also by, for example, surface properties of the backing 4. Practical tests have indicated that this method provides a continuous binder layer with a thickness of 100 to 150 nanometres. Thinning the binder and drying between coating and sprinkling allow the remaining layer thickness to be approximately halved to 50 to 75 nanometres.

Figures 6 and 8 show how the sprinkling remains sparse because the surface of the backing 4 between the abrasive grains 2 has been sucked clean of bottom adhesive before each unit area succeeds in capturing abrasive grains. Figure 8 shows an SEM detail image of a coating test where it can be distinguished how the contact surface of the abrasive grains with the backing has absorbed nearly all of the bottom adhesive that there has been in the area around the abrasive grain. The surface structure of the backing (in this embodiment a corona-treated polyester film) between the abrasive grains can be clearly seen. The applied amount of bottom adhesive has not, however, been sufficient for being absorbed on the surface by the abrasive grains or between the abrasive grains positioned close to each other. Here, therefore, the number of abrasive grains 2 that can be received per unit area of the backing has been effectively limited by means of the accurately limited amount of adhesive. The grain size of the abrasive grains in this embodiment is about 10 µm.

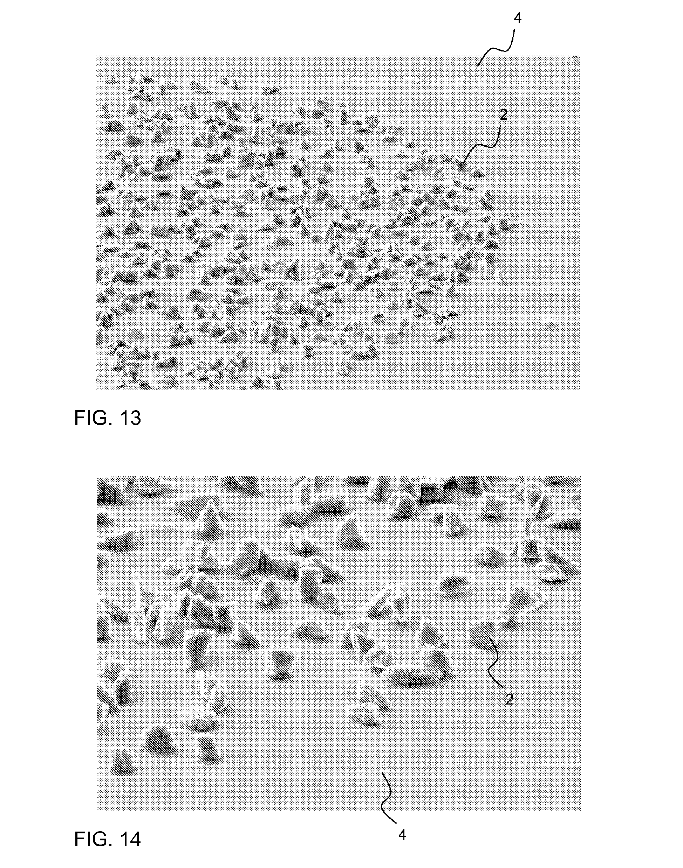

Figures 13 and 14 show a corresponding sprinkling test with abrasive grains 2 of about 5 µm. The SEM image in Figure 13 is an enlargement of 2 000 times. Figure 14 shows the same sprinkling test in an enlargement of 5 000 times.

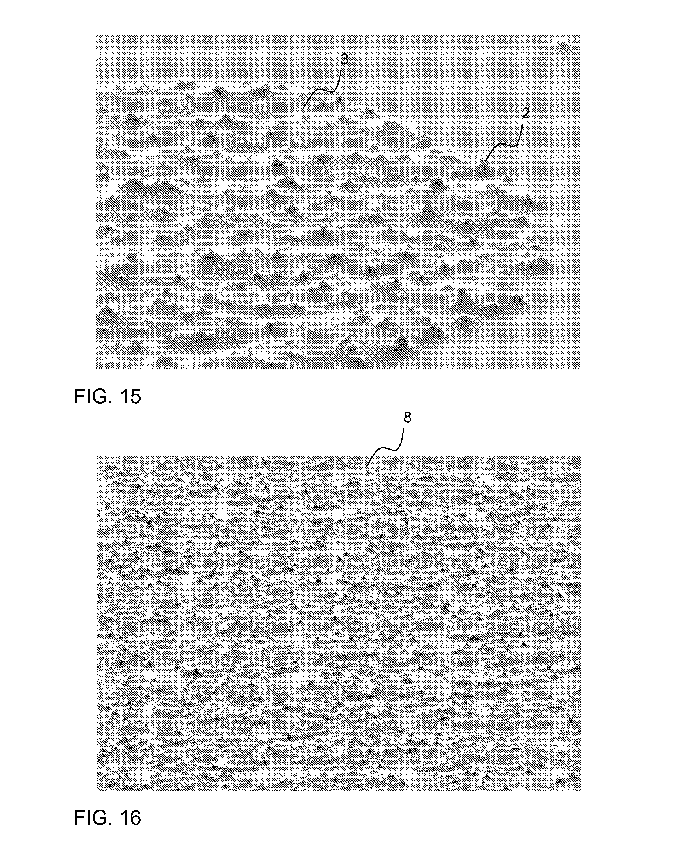

Figure 15 shows a test corresponding to, for example, the above-described embodiments in Figures 13 and 14. In this figure, a layer with binder on top has been coated dropwise. This may preferably be done with the same printer that has been used for distributing the binder 3 forming the bottom adhesive. The SEM image in Figure 15 shows how it has been possible to simply control how large a part of the abrasive grain tops are above the surface of the binder. It is also feasible to make the coating of the binder layer on top with a more conventional method, for example with roll, curtain, transfer or spray method. Such methods are mostly used in the rougher part of the grain size range of 0.5 - 15 µm.

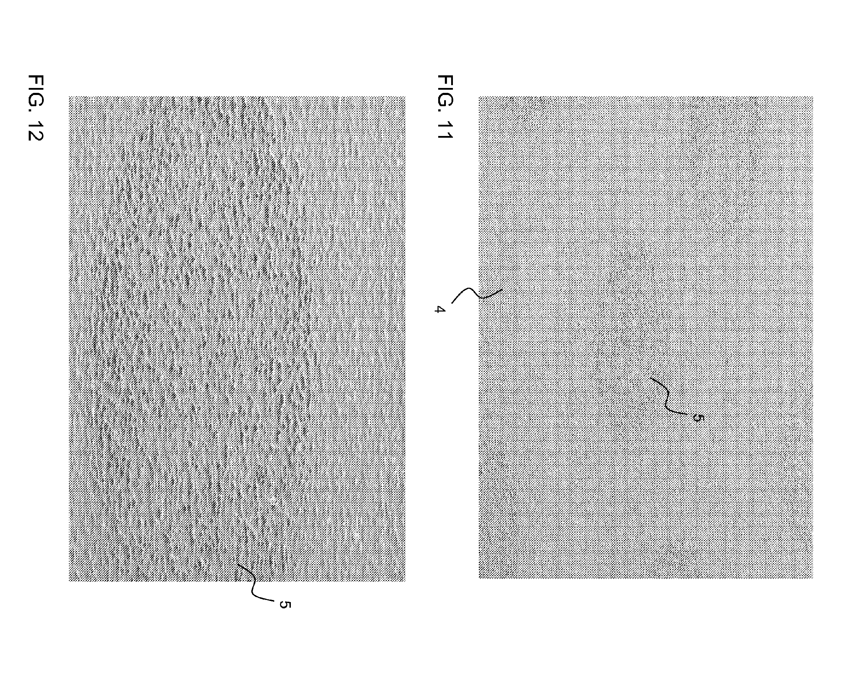

Figures 11 and 12 show SEM images of a coating test where a slurry of binder 3 and abrasive grains 2 have been coated in dot-like units 5 on the backing 4 and how the abrasive grains have been uncovered after drying and hardening to a suitable level by selection of a suitable amount of binder in relation to the abrasive grain amount, suitable dry matter content for the binder and suitable viscosity and wettability of the binder for good spreading of the dot as well as a suitable print droplet size of the coating. The surface structure of the backing (in the present embodiment a polyester film) treated for improved adhesion is to be noticed here as well. Manufacturing products according to the present method with abrasive grains in the submicron range requires a backing with a very high smoothness, i.e. surface structure depth of < 0.5 µm. The grain size in this embodiment is about 0.6 µm.

Figures 16 and 17 finally show SEM images of coating tests where the distribution of the binder 3 in dot-like units 5 has formed specific patterns. In Figure 16, a final result has been achieved where, by means of suitable dosing, the dot-like units of the remaining bottom adhesive have merged to some extent to form a simple but relatively dense pattern. Figure 17 shows a specific zigzag-shaped pattern with a clearly defined shape and channels 8 between the abrasive grain formations.

The above tests are simple examples of what can be achieved with the present method. The most important advantage of the method is that it is possible, on the picolitre level, to determine the amount of binder 3 in each dot over the backing 4 and thereby reliably control the sprinkling result of the abrasive grains 2 down to grain sizes in the submicron range, which is very difficult with previously known coating methods.

The backings 4 for the abrasive product according to the present invention may be ordinary flexible or rigid backings which may equally well have a plane-like or a three-dimensional upper surface. The backing may also be made of specially shaped bodies which may also be three-dimensional and which provide the abrasive product with a structure. This structure is preferably provided by means of perforations and/or slits and/or channels. Thus, the backing and the bodies may be provided with a dense perforation and/or with a network of channels in the surface structure, whose pattern and density are adapted to the size of the abrasive grains. The primarily dot-like units 9 of binder 3 and abrasive grains 2 therein are arranged in such embodiments to form a specific pattern on the backing in such a way that the pattern is adapted to the structure of the abrasive product.

The perforation and the channels may preferably be combined so that they cooperate and can be utilized for transporting either abrasive residues, air or liquids which contribute to the abrasive process.

These channel systems and perforations may be combined with the abrasive product holder so that they can be connected to air suction or blast or to liquid supply.

The channel system for transporting dust, air or liquids may also be formed on the backside of the backing or in a separate layer coated or laminated against the backside of the product. This layer may be of an open voluminous material which may also be used for fastening of the product and which may naturally be utilized for dust, air and liquid transport. The layer may also be a layer which can absorb, transport and give out dust, air and liquid.

The above description and the related figures are only intended to illustrate the present solution for construction of an abrasive product. Thus, the solution is not confined merely to the embodiments described above or in the attached claims but a plurality of variations or alternative embodiments are feasible within the idea described in the attached claims.

## Claims

1. An abrasive product (1) comprising:
a backing (4),
a binder (3) arranged thereon in the form of a bottom adhesive, and
abrasive grains (2) arranged in the bottom adhesive,
**characterized in that**
the binder (3) is distributed dropwise, whereby the binder forms primarily dot-like units (9) on the surface of the backing (4), and that
the distribution of the binder is performed with a dot printer arranged to produce said dot-like units in a substantially uniform front.

2. An abrasive product (1) according to claim 1, **characterized in that** the binder (3) is distributed in a raster with a predetermined resolution.

3. An abrasive product (1) according to any one of the preceding claims, **characterized in that** the abrasive grains (2) arranged in the bottom adhesive have a grain size of 0.5 to 15 µm.

4. An abrasive product (1) according to any one of the preceding claims, **characterized in that** the primarily dot-like units (9) of binder (3) distributed on the surface of the backing are positioned adjacent to each other in such a way that the units have merged completely or partially.

5. An abrasive product (1) according to any one of the preceding claims, **characterized in that** the primarily dot-like units (9) of binder (3) and abrasive grains (2) arranged therein are arranged to form a specific pattern on the backing (4), comprising formations that have merged or that are separate from each other.

6. An abrasive product (1) according to claim 5, **characterized in that** the primarily dot-like units (9) of binder (3) and abrasive grains (2) comprised by them are arranged to form a specific pattern on the backing (4) in such a way that this pattern in adapted to the structuring of the backing.

7. A method for manufacturing an abrasive product (1), comprising coating a backing (4) with a binder (3) in the form of a bottom adhesive, and
arranging abrasive grains (2) in the bottom adhesive, **characterized in that**
the binder (3) is distributed dropwise in such a way that the binder forms primarily dot-like units (9) on the surface of the backing (4), whereby
the distribution of the binder is performed with a dot printer, whereby the dot-like units (9) are produced in a substantially uniform front on the backing.

8. A method according to claim 7, **characterized in that** the binder (3) is distributed in a raster with a predetermined resolution.

9. A method according to claim 7 or 8, **characterized in that** the dot-like units (9) are formed by droplets with a volume of 2 to 50 picolitres.

10. A method according to any one of claims 7 to 9, **characterized in that** the abrasive grains (2) that are arranged in the dot-like units (9) are selected in such a way that they have a grain size of 0.5 to 15 µm.

11. A method according to any one of claims 7 to 10, **characterized in that** abrasive grains (2) are mixed with the binder (3) into a slurry, after which said coating of the surface of the backing (4) is performed dropwise.

12. A method according to any one of claims 7 to 10, **characterized in that** the abrasive grains (2) are sprinkled to the dot-like units (9) of bottom adhesive, which have not yet hardened, on the surface of the backing (4).

13. A method according to any one of claims 7 to 12, **characterized in that** the primarily dot-like units (9) of binder, positioned adjacent to each other, are provided with a resolution that makes them merge completely or partially.

14. A method according to any one of claims 7 to 13, **characterized in that** the primarily dot-like units (9) of binder (3) and abrasive grains (2) arranged therein create a specific pattern on the backing (4).

15. A method according to any one of claims 7 to 14, **characterized in that** in coating the backing (4) formed by a conveyor belt, each individual abrasive product (1) is coated as a separate pattern on the backing, isolated from the adjacent ones.
